# FASCICULE DE BREVET EUROPEEN

(11) **EP 3 113 982 B1**
(45) Date de publication et mention de la délivrance du brevet: **04.04.2018**
(21) Numéro de dépôt: 15706903.0
(22) Date de dépôt: 10.02.2015
(51) Int. Cl.: B60R 13/08, B62D 25/20

(54) **ENSEMBLE POUR CHÂSSIS DE VÉHICULE AUTOMOBILE**
ANORDNUNG FÜR EINEN KAROSSERIERAHMEN EINES KRAFTFAHRZEUGS
MOTOR VEHICLE CHASSIS ASSEMBLY

(30) Priorité: 05.03.2014 FR 1451777
(43) Date de publication de la demande: 11.01.2017
(73) Titulaire: PSA Automobiles SA, 78300 Poissy (FR)
(72) Inventeur: SAILLARD, David, 39100 Dole (FR); TALLET, Frederic, 70200 Moffans et Vacheresse (FR)
(74) Mandataire: Renous Chan, Véronique
(86) Numéro de dépôt international: PCT/FR2015/050311
(87) Numéro de publication internationale: WO 2015/132493

(56) Documents cités:
- EP-A1- 1 690 742
- WO-A1-2012/107265
- DE-U1-202004 015 698
- FR-A1- 2 942 504
- US-A1- 2002 185 893

## Description

La présente invention porte sur un ensemble pour châssis de véhicule automobile ainsi que sur le procédé de montage correspondant. L'invention trouve une application particulièrement avantageuse, mais non exclusive, avec les véhicules automobiles de type utilitaire.

De façon connue en soi, un ensemble pour châssis de véhicule automobile comporte un plancher s'étendant sensiblement le long du véhicule suivant un axe longitudinal. Dans les architectures classiques de véhicule, le plancher présente un tunnel délimitant un passage pour la ligne d'échappement du moteur thermique. Le document US2002/0185893 montre ainsi en figure 2 la forme typique d'un plancher de véhicule automobile comportant un tunnel incurvé vers l'intérieur du véhicule ayant une section sensiblement en forme de U pour permettre le passage de la ligne d'échappement le long du véhicule. Le tunnel forme ainsi une protubérance à l'intérieur de l'habitacle du véhicule, ce qui empêche d'optimiser son remplissage lors d'un chargement. DE202004015698 U1 décrit un ensemble pour châssis de véhicule automobile comportant un plancher de véhicule selon le préambule de la revendication 1.

Afin de remédier à ce problème, la demanderesse a développé des véhicules de type utilitaire munis de planchers sensiblement plats visant à faciliter le remplissage du véhicule. La forme plane dépourvue de tunnel permet en effet d'optimiser l'espace libre à l'intérieur du véhicule et autorise en outre un repliage complet du ou des sièges passager. Toutefois, on s'est aperçu qu'avec une telle architecture de plancher, l'air chaud issu du compartiment moteur venait chauffer anormalement les éléments sous caisse.

L'invention vise à remédier efficacement à cet inconvénient en proposant un ensemble pour châssis de véhicule automobile comportant un plancher de véhicule destiné à s'étendre sensiblement le long du véhicule suivant un axe longitudinal, et une ligne d'échappement de gaz brûlés durant une combustion dans un moteur thermique, caractérisé en ce que ledit plancher étant sensiblement plat, ledit ensemble pour châssis comporte au moins un écran thermique, dit écran central, s'étendant suivant ledit axe longitudinal du véhicule, ledit écran central délimitant un passage pour ladite ligne d'échappement dudit véhicule.

Ainsi, du fait de la création du passage pour la ligne d'échappement au moyen de l'agencement du ou des écrans thermiques, l'invention permet de faciliter l'évacuation de l'air chaud provenant notamment du compartiment moteur et de la ligne d'échappement. On évite ainsi la surchauffe des éléments sous caisse dans une configuration de véhicule à plancher plat.

Selon une réalisation, ledit ensemble pour châssis comporte en outre un écran thermique, dit écran de tablier, monté entre un tablier du véhicule et ledit écran central du véhicule. L'écran de tablier permet ainsi de rigidifier l'écran central. L'écran de tablier est en outre configuré pour être compatible avec l'ordre de montage sur les lignes de montage existantes.

Selon une réalisation, ledit écran de tablier présente une portion bombée orientée de manière à pouvoir casser une vague générée lors d'un passage au gué. Cela permet de protéger l'écran central d'un éventuel arrachement par une vague lors d'un passage au gué. Cette portion bombée aérodynamique permet en outre de ne pas perturber le convoyage de l'air chaud sous caisse.

Selon une réalisation, ledit écran de tablier et ledit écran central se superposent l'un par rapport à l'autre dans une zone de jonction. Une telle configuration permet d'améliorer les prestations thermiques du véhicule en supprimant l'espace entre les différents écrans pour éviter de chauffer l'intérieur de l'habitable.

Selon une réalisation, ladite zone de jonction entre ledit écran de tablier et ledit écran central est non linéaire. Une telle caractéristique permet de garantir un contact d'appui entre les deux écrans. On améliore ainsi les prestations phoniques du véhicule en évitant que les écrans vibrent en cours d'utilisation du véhicule malgré les différents intervalles de tolérance de fabrication et la déformation que peuvent subir les pièces en bord de ligne.

Selon une réalisation, ladite zone de jonction présente une forme s'étendant dans les trois dimensions de l'espace sur des distances supérieures à une simple épaisseur de matériau.

Selon une réalisation, ladite zone de jonction entre ledit écran de tablier et ledit écran central présente une forme courbe ayant au moins un changement de rayon de courbure.

Selon une réalisation, ledit écran de tablier présente une rigidité supérieure à celle dudit écran central.

Selon une réalisation, ledit écran de tablier comporte au moins deux bras pour sa fixation sur ledit tablier écartés l'un par rapport à l'autre de manière à autoriser un passage de moyens de commande du véhicule.

Selon une réalisation, ledit ensemble pour châssis comporte en outre un écran thermique, dit écran arrière, situé dans une partie arrière du véhicule dans un prolongement dudit écran central.

Selon une réalisation, ledit écran arrière est destiné à recevoir un silencieux de ladite ligne d'échappement.

L'invention a également pour objet un procédé de montage d'un ensemble pour châssis caractérisé en ce qu'il comporte les étapes suivantes:
- une étape de montage d'un écran thermique, dit écran de tablier, sur un tablier de véhicule automobile issu d'un plancher de véhicule,
- une étape de montage, sur un porte-organe mécanique, d'une ligne d'échappement et d'au moins un écran thermique, dit écran central, délimitant un passage pour ladite ligne d'échappement, et
- une étape de montage dudit écran central et de ladite ligne d'échappement sur ledit plancher en sorte que ledit écran central et ledit écran de tablier se superposent l'un par rapport à l'autre dans une zone de jonction.

L'invention sera mieux comprise à la lecture de la description qui suit et à l'examen des figures qui l'accompagnent. Ces figures ne sont données qu'à titre illustratif mais nullement limitatif de l'invention.

La figure 1 représente une vue de dessous de l'ensemble pour châssis selon la présente invention;

La figure 2 est une vue en perspective de la zone avant de l'ensemble pour châssis selon la présente invention située du côté du groupe motopropulseur;

La figure 3a est une vue en perspective de l'assemblage entre l'écran thermique de tablier et l'écran central appartenant à l'ensemble pour châssis selon la présente invention;

La figure 3b est une vue de détails de la zone de jonction entre l'écran de tablier et l'écran central de la figure 3a.

Les éléments identiques, similaires, ou analogues conservent la même référence d'une figure à l'autre.

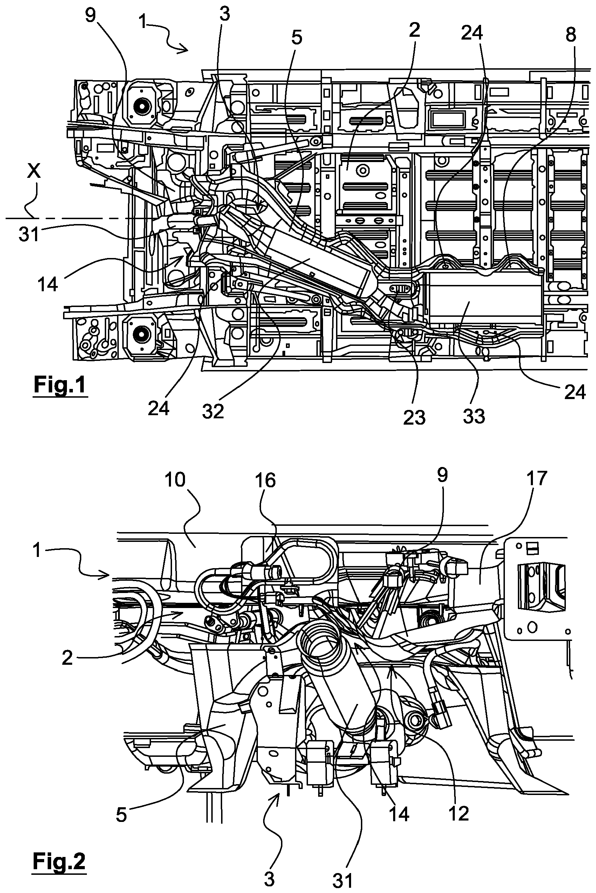

La figure 1 montre un ensemble 1 pour châssis de véhicule automobile selon la présente invention comportant un plancher 2 s'étendant sensiblement le long du véhicule suivant un axe longitudinal X. Ce plancher 2 présente une face interne et une face externe. Dans la description, on entend par "face interne" une face destinée à être orientée vers le sol en condition de roulage du véhicule et par "face externe" une face destinée à être orientée du côté opposé au sol en condition de roulage du véhicule, c'est-à-dire du côté de l'habitacle du véhicule.

L'ensemble 1 comporte également une ligne d'échappement 3 située du côté de la face interne du plancher 2. Cette ligne d'échappement 3 comprend notamment un conduit d'échappement 31 et un catalyseur 32 appartenant à un système de type SCR permettant de réduire chimiquement les oxydes d'azote présents dans les gaz d'échappement. La ligne 3 comporte également un silencieux 33 en partie arrière.

Par ailleurs, l'ensemble 1 comporte un premier écran thermique 5, dit écran central, et un deuxième écran thermique 8, dit écran arrière, situé dans le prolongement de l'écran central 5. L'écran arrière 8 est destiné plus particulièrement à recevoir le silencieux 33 de la ligne d'échappement 3. Ces deux écrans thermiques 5, 8 délimitent un passage pour la ligne d'échappement 3. A cet effet, les écrans thermiques 5, 8 présentent une forme en oméga dont les branches d'extrémité sont fixées sur des supports montés sur la face interne du plancher 2. Les écrans 5, 8 sont réalisés par exemple en aluminium gaufré. En variante, l'écran central 5 et l'écran arrière 8 sont réalisés d'un seul tenant.

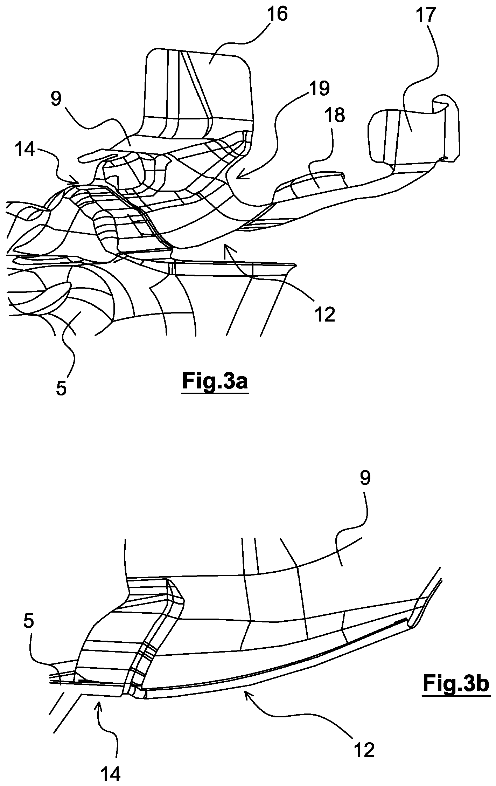

Par ailleurs, comme on peut le voir sur la figure 2, un écran thermique 9, dit écran de tablier, est monté entre un tablier 10 et l'écran central 5 du véhicule. On rappelle que le tablier 10 issu du plancher 2 est une paroi qui assure une séparation entre l'intérieur de l'habitacle et le groupe motopropulseur du véhicule. L'écran de tablier 9 présente une portion bombée 12 visible en figure 3a et 3b orientée de manière à pouvoir casser une vague générée lors d'un passage au gué. La portion bombée 12 est dirigée vers le sol et est orientée sensiblement perpendiculairement à une direction d'avancement de la vague. Cela permet de protéger l'écran central 5 d'un éventuel arrachement par la vague. Cette forme aérodynamique permet en outre de ne pas perturber le convoyage de l'air chaud sous caisse.

L'écran de tablier 9 et l'écran central 5 se superposent l'un par rapport à l'autre dans une zone de jonction 14 bien visible sur la figure 3a. L'écran de tablier 9 est en appui sur une face externe de l'écran central 5 tournée vers l'intérieur du véhicule. Une telle configuration d'assemblage permet d'améliorer les prestations thermiques du véhicule en supprimant l'espace entre les écrans 5 et 9 pour éviter de chauffer l'intérieur de l'habitable.

La zone de jonction 14 entre l'écran de tablier 9 et l'écran central 5 est de préférence non linéaire. La zone de jonction 14 présente une forme, dite forme 3D, s'étendant dans les trois dimensions de l'espace sur des distances supérieures à une simple épaisseur de matériau. La zone de jonction 14 entre l'écran de tablier 9 et l'écran central 5 présente une forme courbe ayant au moins un changement de rayon de courbure.

Cela permet de garantir un bon contact d'appui entre les deux écrans 5 et 9. On améliore ainsi les prestations phoniques du véhicule en évitant que les écrans 5 et 9 vibrent en cours d'utilisation du véhicule, lors de claquement de porte par exemple, malgré les différents intervalles de tolérance de fabrication et la déformation que peuvent subir les pièces en bord de ligne.

L'écran de tablier 9 présente de préférence une rigidité supérieure à l'écran central 5. Ainsi, l'écran de tablier 9 est réalisé par exemple en acier alors que comme on l'a vu l'écran central est réalisé en aluminium gaufré.

L'écran de tablier 9 comporte par ailleurs deux bras 16 et 17 bien visibles en figure 2 pour sa fixation sur le tablier 10. Ces bras 16 et 17 sont écartés l'un par rapport à l'autre de manière à autoriser un passage de moyens de commande du véhicule. En l'occurrence, le câble de commande de passage de vitesse référencé 21 passe entre les deux bras 16 et 17. Ces bras 16 et 17 assurent principalement un maintien de l'écran de tablier 9 suivant une direction longitudinale du véhicule. L'écran de tablier 9 comporte en outre deux autres bras 18 et 19 (le bras 19 est situé derrière la pièce sur la vue de la figure 3a) fixés sur le plancher 2 pour assurer principalement un maintien suivant une direction verticale perpendiculaire au plancher 2.

On décrit ci-après l'ordre de montage des écrans 5, 8 et 9 en chaîne de montage. L'écran de tablier 9 est tout d'abord monté via ses bras 16-19 sur le tablier 10 et le plancher 2 avant coiffage des éléments sous-caisse et avant le groupe motopropulseur.

L'écran central 5 et l'écran arrière 8 ainsi que la ligne d'échappement 3 sont montés sur un porte-organe mécanique (non représenté). Ces écrans 5 et 8 sont fixés au moyen de supports d'échappement 23 montrés sur la figure 1 dans une zone de recouvrement dans laquelle se superposent un bord arrière de l'écran central 5 et un bord avant de l'écran arrière 8. Les écrans 5 et 8 sont également fixés indépendamment sur des supports du plancher 2 par des moyens de fixation 24 prenant la forme de vis. Tout autre moyen de fixation, comme par exemple des rivets, serait également adapté à leur fixation. Après accostage du porte-organe, l'écran central 5 est positionné de manière à venir en appui avec l'écran de tablier 9 déjà fixé à la structure de caisse dans la zone de jonction 14.

Bien entendu, la description qui précède a été donnée à titre d'exemple uniquement et ne limite pas le domaine de l'invention dont on ne sortirait pas en remplaçant les détails d'exécution par tous autres équivalents.

## Revendications

1. Ensemble (1) pour châssis de véhicule automobile comportant un plancher (2) de véhicule destiné à s'étendre sensiblement le long du véhicule suivant un axe longitudinal (X), et une ligne d'échappement (3) de gaz brûlés durant une combustion dans un moteur thermique, **caractérisé en ce que** ledit plancher (2) est sensiblement plat, c'est à dire,dépourvue de tunnel, et **en ce que** ledit ensemble (1) pour châssis comporte au moins un écran thermique (5), dit écran central, s'étendant suivant ledit axe longitudinal (X) du véhicule, ledit écran central (5) délimitant un passage pour ladite ligne d'échappement dudit véhicule (3).

2. Ensemble selon la revendication 1, **caractérisé en ce qu'**il comporte en outre un écran thermique (9), dit écran de tablier, monté entre un tablier (10) du véhicule et ledit écran central (5) du véhicule.

3. Ensemble selon la revendication 2, **caractérisé en ce que** ledit écran de tablier (9) présente une portion bombée (12) orientée de manière à pouvoir casser une vague générée lors d'un passage au gué.

4. Ensemble selon la revendication 2 ou 3, **caractérisé en ce que** ledit écran de tablier (9) et ledit écran central (5) se superposent l'un par rapport à l'autre dans une zone de jonction (14).

5. Ensemble selon la revendication précédente, **caractérisé en ce que** ladite zone de jonction (14) entre ledit écran de tablier (9) et ledit écran central (5) est non linéaire.

6. Ensemble selon la revendication 4 ou 5, **caractérisé en ce que** ladite zone de jonction (14) présente une forme s'étendant dans les trois dimensions de l'espace sur des distances supérieures à une simple épaisseur de matériau.

7. Ensemble selon l'une quelconque des revendications 4 à 6, **caractérisé en ce que** ladite zone de jonction (14) entre ledit écran de tablier (9) et ledit écran central (5) présente une forme courbe ayant au moins un changement de rayon de courbure.

8. Ensemble selon l'une quelconque des revendications 2 à 7, **caractérisé en ce que** ledit écran de tablier (9) présente une rigidité supérieure à celle dudit écran central (5).

9. Ensemble selon l'une quelconque des revendications 2 à 8, **caractérisé en ce que** ledit écran de tablier (9) comporte au moins deux bras (16, 17) pour sa fixation sur ledit tablier (10) écartés l'un par rapport à l'autre de manière à autoriser un passage de moyens de commande du véhicule.

10. Ensemble selon l'une quelconque des revendications 1 à 9, **caractérisé en ce qu'**il comporte en outre un écran thermique (8), dit écran arrière, situé dans une partie arrière du véhicule dans un prolongement dudit écran central (5).

## Patentansprüche

1. Anordnung (1) für Kraftfahrzeug-Karosserierahmen, der einen Fahrzeugboden (2) umfasst, der dazu bestimmt ist, sich im Wesentlichen entlang des Fahrzeugs entlang einer Längsachse (X) zu erstrecken, und einen Abgasstrang (3) von Gasen, die während einer Verbrennung in einer Wärmekraftmaschine verbrannt werden, **dadurch gekennzeichnet, dass** der Boden (2) im Wesentlichen flach ist, das heißt ohne Tunnel, und dass die Anordnung (1) für Karosserierahmen mindestens eine Wärmeabschirmung (5), zentrale Abschirmung genannt, umfasst, die sich entlang der Längsachse (X) des Fahrzeugs erstreckt, wobei die zentrale Abschirmung (5) eine Passage für den Abgasstrang des Fahrzeugs (3) abgrenzt.

2. Anordnung nach Anspruch 1, **dadurch gekennzeichnet, dass** sie außerdem eine Wärmeabschirmung (9), Spritzwandabschirmung genannt, die zwischen einer Spritzwand (10) des Fahrzeugs und der zentralen Abschirmung (5) des Fahrzeugs montiert ist, umfasst.

3. Anordnung nach Anspruch 2, **dadurch gekennzeichnet, dass** die Spritzwandabschirmung (9) einen gewölbten Abschnitt (12) aufweist, der derart ausgerichtet ist, dass er eine Welle, die bei einer Watpassage erzeugt wird, brechen kann.

4. Anordnung nach Anspruch 2 oder 3, **dadurch gekennzeichnet, dass** die Spritzwandabschirmung (9) und die zentrale Abschirmung (5) einander in einer Verbindungszone (14) überlagern.

5. Anordnung nach dem vorhergehenden Anspruch, **dadurch gekennzeichnet, dass** die Verbindungszone (14) zwischen der Spritzwandabschirmung (9) und der zentralen Abschirmung (5) nicht linear ist.

6. Anordnung nach Anspruch 4 oder 5, **dadurch gekennzeichnet, dass** die Verbindungszone (14) eine Form aufweist, die sich in die drei Dimensionen des Raums über Entfernungen, die größer sind als eine einfache Materialstärke, erstrecken.

7. Anordnung nach einem der Ansprüche 4 bis 6, **dadurch gekennzeichnet, dass** die Verbindungszone (14) zwischen der Spritzwandabschirmung (9) und der zentralen Abschirmung (5) eine gekrümmte Form aufweist, die mindestens eine Krümmungsradiusänderung hat.

8. Anordnung nach einem der Ansprüche 2 bis 7, **dadurch gekennzeichnet, dass** die Spritzwandabschirmung (9) eine Steifigkeit aufweist, die größer ist als die der zentralen Abschirmung (5).

9. Anordnung nach einem der Ansprüche 2 bis 8, **dadurch gekennzeichnet, dass** die Spritzwandabschirmung (9) mindestens zwei Arme (16, 17) für ihre Befestigung auf der Spritzwand (10) umfasst, die voneinander derart beabstandet sind, dass sie ein Durchgehen von Steuermitteln des Fahrzeugs gestatten.

10. Anordnung nach einem der Ansprüche 1 bis 9, **dadurch gekennzeichnet, dass** sie außerdem eine Wärmeabschirmung (8), hintere Abschirmung genannt, umfasst, die in einem hinteren Teil des Fahrzeugs in einer Verlängerung der zentralen Abschirmung (5) liegt.

## Claims

1. A motor vehicle chassis assembly (1) comprising a vehicle floor (2) intended to extend substantially along the vehicle along a longitudinal axis (X), and an exhaust line (3) for gases burnt during a combustion in a heat engine, **characterized in that** said floor (2) is substantially flat, i.e. without a tunnel, and **in that** said chassis assembly (1) comprises at least one heat screen (5), designated central screen, extending along said longitudinal axis (X) of the vehicle, said central screen (5) delimiting a passage for said exhaust line of said vehicle (3).

2. The assembly according to Claim 1, **characterized in that** it comprises in addition a heat screen (9), designated cowl screen, mounted between a cowl (10) of the vehicle and said central screen (5) of the vehicle.

3. The assembly according to Claim 2, **characterized in that** said cowl screen (9) has a bulged portion (12) oriented so as to be able to break a wave generated when crossing a ford.

4. The assembly according to Claim 2 or 3, **characterized in that** said cowl screen (9) and said central screen (5) are superposed one with respect to the other in a junction zone (14).

5. The assembly according to the preceding claim, **characterized in that** said junction zone (14) between said cowl screen (9) and said central screen (5) is non-linear.

6. The assembly according to Claim 4 or 5, **characterized in that** said junction zone (14) has a shape extending in the three spatial dimensions over distances greater than a single thickness of material.

7. The assembly according to any one of Claims 4 to 6, **characterized in that** said junction zone (14) between said cowl screen (9) and said central screen (5) has a curved shape having at least one change of radius of curvature.

8. The assembly according to any one of Claims 2 to 7, **characterized in that** said cowl screen (9) has a greater rigidity than that of said central screen (5).

9. The assembly according to any one of Claims 2 to 8, **characterized in that** said cowl screen (9) comprises at least two arms (16, 17) for it to be fixed on said cowl (10), which are spaced apart with respect to one another so as to permit a passage of control means of the vehicle.

10. The assembly according to any one of Claims 1 to 9, **characterized in that** it comprises in addition a heat screen (8), designated rear screen, situated in a rear portion of the vehicle in an extension of said central screen (5).
